# EUROPEAN PATENT APPLICATION

(11) **EP 4 383 223 A1**
(43) Date of publication of application: **12.06.2024**
(21) Application number: 23213971.7
(22) Date of filing: 04.12.2023
(51) Int. Cl.: G07F 17/12, G07F 11/46, B65G 1/04, B65D 19/00, B65D 25/22

(54) **A TRANSPORT TRAY**

(30) Priority: 06.12.2022 PL 44306222
(71) Applicant: Retail Robotics Manyfacturing & Services Sp. z o.o., 41-110 Tychy (PL)
(72) Inventor: OSSOWSKI, Michal, 94-122 Lodz (PL); ZAKRZEWSKI, Michal, 03-285 Warszawa (PL); SEDEK, Jaroslaw, 05-408 Lipowo (PL)
(74) Representative: Markieta, Jaroslaw Franciszek

(57) **Abstract**

A transport tray (1) for automated parcel terminals (APTs) comprised with a carrying chamber (10) with a bottom (15) with reinforcing ribbing (17) and four walls (20, 21, 22, 23), the tray being provided with side bars (25) crowning the upper edges of the side walls (21, 22) of the tray (1), the walls of the tray (20, 21, 22, 23) run upwards from the bottom (15) diagonally outwards, **characterised in that** at the edges of the front and rear walls (20, 23) the tray is provided with two gripping flanges (30), each of which is provided with at least two gripping slots (35) and a front tab (37), whereas the gripping flanges (30) run downwards diagonally to the outside of the tray, with the face tab (37) essentially running outwards parallel to the bottom (15) of the tray (1).

## Description

The object of the invention is a transport tray for automated parcel terminals (APTs). The invention has applications in automated points of sale (POS).

In the state of the art, robotic POS using containers/transport trays are known.

Publication CN208747157U discloses an automated storage device for transport trays nested one inside the other and a tray design for use in such a device. The tray according to this disclosure has diagonally sloping walls, a flat bottom and a horizontal edge curved around the entire circumference. In addition, three limiters are running vertically down the front wall to maintain the distance between the trays when they are stacked.

Publication US2020402340A1 discloses an automated self-service parcel terminal using parcel trays. The automated parcel terminal uses parcel trays to store goods (parcels) of various sizes and transport them inside the terminal. The use of trays allows goods of different sizes and irregular shapes to be stored without imposing strict requirements on their packaging. The parcel tray comprises a tray base and a metal plate (preferably steel) at one end. The steel plate is the mounting point for the electromagnet, which is used to transfer the parcel tray to and from the loader, perpendicular to the travel path of the rail of the conveying machine. The base of the parcel tray is advantageously provided with chamfered corners and tapered sides to guide the parcel tray between the two columns supporting the shelves or into the loader. The tray base can be made from a variety of materials, including steel, stainless steel, various thermoplastics, and composites, among others.

Publication US2022081211A1 discloses an automated parcel terminal having one or more entry and pick-up points. The terminal is equipped with a lift cage and loader that allows specially designed trays to be transported to and from the racking columns on either side of the lift cage. The lift and loader unit enables the loader to handle multiple shelf columns at the terminal. The loader has a rear cover configured to protect users from moving parts of the terminal, but also to support trays in the shelf column while the loader pulls one tray from the shelf column. The unit uses a storage tray that generally has four sides, with two parallel sides having tray side extensions. Advantageously, underneath the tray side extensions, there are toothed coupling sprockets running transversely to the side of the tray and parallel to each other along the entire length of the tray.

In some embodiments in US2022081211A1, the coupling sprockets may have different lengths or may be positioned differently. The tray side extensions also include a bearing surface. The profile of the toothed bar allows for high-precision movements. The bearing surfaces are above the coupling sprocket and extend further outwards than the coupling sprockets. Bearing surfaces are used to support the trays after they have been placed in the shelf columns between the shelf supports. The bearing surfaces also support the trays when they are placed on the loader, and are also configured to guide the trays during the process of moving from the loader to the shelf columns and vice versa. The support surfaces have tapered ends at both ends to guide the parcel tray onto the loader as it is pulled from the shelf column of the automated parcel terminal.

The essence of the invention is a transport tray for automated parcel terminals (APTs) comprising of a carrying chamber with a bottom with reinforcing ribs and four walls, the tray being provided with side bars crowning the upper edges of the side walls of the tray. The walls of the tray run from the bottom upwards diagonally outwards. The tray according to the invention is characterised by the fact that at the edges of the front and back walls it is provided with two gripping flanges, each of which is provided with at least two gripping slots and a face tab. The gripping flanges run downwards diagonally to the outside of the tray, with the face tab essentially outwards parallel to the bottom of the tray.

Furthermore, the tray according to the invention is characterised by the fact that the grip slots are in the form of a trapezoidal projection.

Furthermore, the tray according to the invention is characterised by the fact that the trapezoidal projection is constructed with two side walls and an upper wall.

Furthermore, the tray according to the invention is characterised by the fact that a trapezoidal projection runs through the front tab, the gripping flange, and the front wall of the tray.

Furthermore, the tray according to the invention is characterised in that the gripping slots are provided with holes for stabilisation located in the face of the slot within the trapezoidal projection.

Furthermore, the tray according to the invention is characterised by the fact that the stabilising hole is positioned above the front tab.

Furthermore, the tray according to the invention is characterised in that the side bars provided with longitudinal recesses forming transport guides are positioned on the lower surface of the side bar.

Furthermore, the tray according to the invention is characterised by the fact that the side bars are provided with at least two recesses.

Furthermore, the tray according to the invention is characterised by the fact that the recesses are semicircular in cross-section and are spaced from each other generally by the length of the diameter of a single recess.

Furthermore, the tray according to the invention is characterised by the fact that the side bars run along the side walls and extend beyond the front wall of the tray, ending before the front tab of the gripping flange.

Furthermore, the tray according to the invention is characterised by the fact that the side bars are connected by a reinforcing wall to the gripping flange and the front tab.

The transport tray is designed with a geometry that allows the trays to be stacked correctly (stacking of trays on top of each other) while maximising the working surface for the parcels. Furthermore, the geometry of the tray according to the invention enables trays to be manufactured consistently and reliably using plastic injection moulding while maximising the working area for the parcels. A further advantage of the shape of the tray according to the invention is that it ensures proper interaction with the gripper pickers and that the tray has a long service life. The shape of the side bars ensures that the tray interacts well with the guides of the support racks inside the automated parcel terminal.

The advantageous embodiment of the subject of the invention has been shown in greater detail in the following figures:
- Fig. 1: shows the transport tray according to the invention in isometric projection;

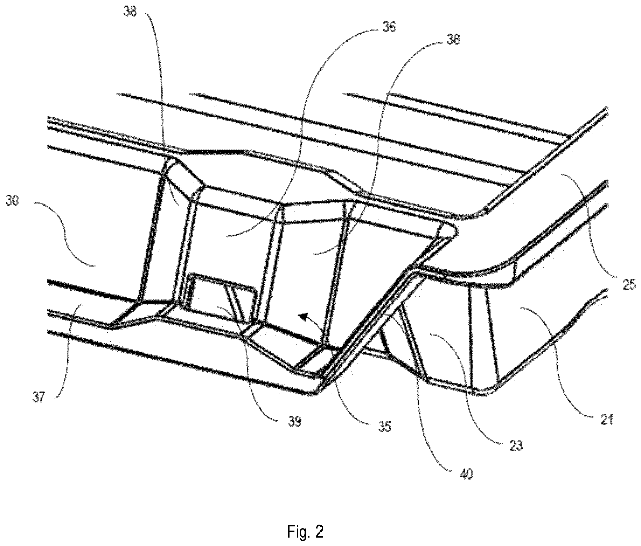

- Fig. 2: shows a close-up isometric projection of the corner of a tray according to the invention with a gripping slot;

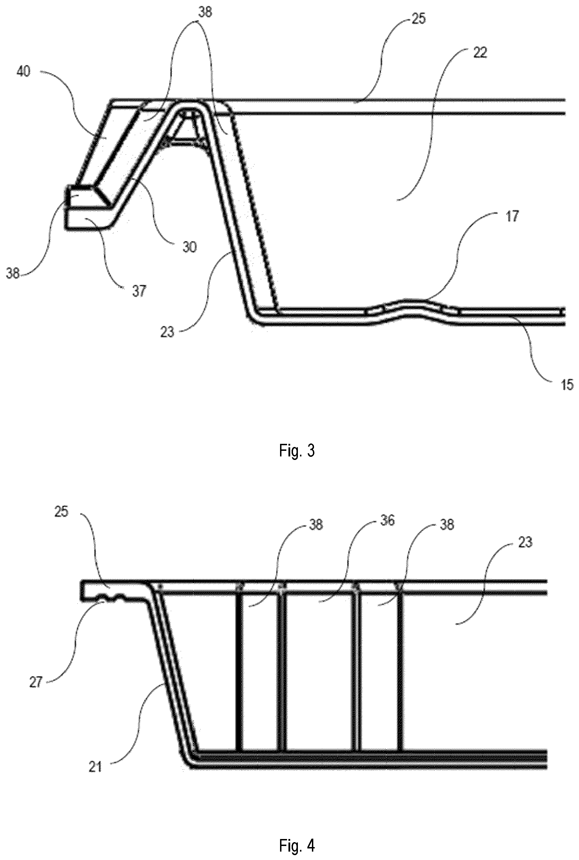

- Fig. 3: shows a cross-sectional view of the front wall of the tray according to the invention showing the shape of the gripping slot from the side;
- Fig. 4: shows a cross-sectional view of the side wall of the tray according to the invention showing the shape of the side bar in cross-section and the shape of the gripping slot from inside the tray.

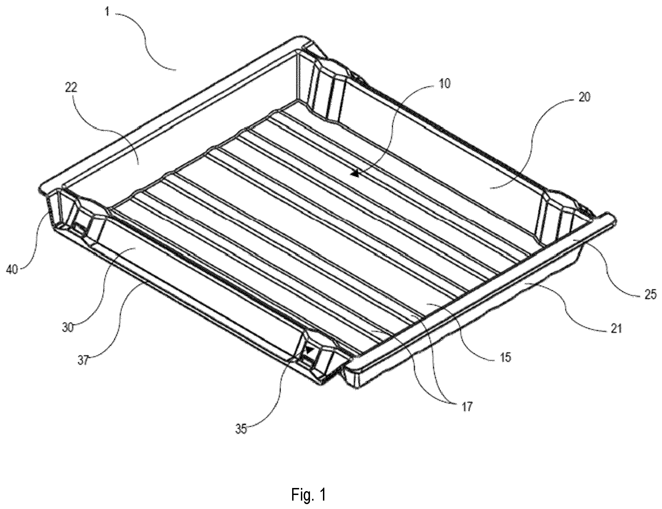

Fig. 1 shows a transport tray in a preferred embodiment. Transport tray 1 for automated parcel terminals APTs is provided with a carrying chamber 10 with bottom 15. The outline of tray 1 is rectangular with ribbing 17 reinforcing the bottom 15. The tray is provided with four walls, two side walls 21, 22 and front wall 23 and rear wall 20. The bottom and walls of the tray form an open-top carrying chamber 10. Ribbing 17 runs transversely in the bottom 15, i.e. between the side walls 21, 22. Ribbing 17 stiffens the construction of the bottom 15 by preventing the bottom 15 from bending downwards under the pressure of the consignment being transported or stored. Tray 1 is also provided with side bars 25 crowning the upper edges of the side walls 21, 22. The function of the side bars 25 is to hold the tray between the sliding guides of the rack inside the automated parcel terminal. Advantageously in tray 1 the tray walls 20, 21, 22, 23 run upwards diagonally outwards from the vertical axis of the transport chamber 10. This shape of the tray walls makes it easy to store the trays one inside the other.

At the edges of the front and rear walls 20, 23 the tray is provided with two gripping flanges 30, each of which is provided with at least two gripping slots 35 and a front tab 37.

Gripping flanges 30 run down diagonally to the outside of the tray, creating a working space in which the gripper of the automated conveying machine can operate. The working space for the gripper of the automated conveying unit is closed off on both sides by the front wall 23 or rear wall 20 respectively and the corresponding gripping flange 30, while it remains accessible from below. In the lateral section, the space defined by wall 23 and flange 30 is triangular. Such a geometry of the gripping space also supports the stacking of trays, while ensuring that tray 1 can be transported with the gripper. The gripping flanges 30 terminate in a front tab 37, which runs generally towards the outside of tray 1 and parallel to the bottom 15 of tray 1. The front tab 37 forms a buffer edge, advantageously the tab 37 can be thicker than the other walls of tray 1.

Thanks to the introduction of gripping flanges 30, it is possible to grip and move tray 1 inside the rack at the automated parcel terminal using the gripper of the automated conveying machine. Tray 1 is moved using the gripping flanges 30 in the longitudinal direction by pulling on the corresponding gripping flange 30. Alternatively or in addition, tray 1 can be moved in the longitudinal direction by pushing tray 1 using the front wall 23 and the rear wall 20, in which case the gripper of the automated conveyor can push against the walls 23, 20.

Advantageously, transport tray 1 is provided with gripping slots 35 which have the form of a trapezoidal projection. The function of the gripping slots is to stabilise the grip with which the gripper of the automated transport machine grabs tray 1. The gripper arm sliding on the inside of the walls of the gripping slot 35 towards the axis of the slot, even in the event of a positioning error, will move tray 1 to the correct position in the coordinate system associated with the manipulator design. The geometry of slot 35, which has a favourable projection, also improves the structural rigidity of tray 1, increasing its mechanical strength, which is particularly important when transporting heavy parcels. Advantageously, the trapezoidal projection of the slot 35 is made up of two side walls 38 and an upper wall 36. The introduction of edges connecting the individual walls of the trapezoidal projection again positively increases the rigidity of the structure and its mechanical strength. The effect of increasing mechanical strength can be further increased by routing the trapezoidal projection of the slot 35 from the front tab (37) through the gripping flange 30 and the front 23 or rear 20 wall of the tray to the bottom 15 of the tray. Alternatively, the convex shape of the gripping slot can be achieved using other geometric shapes such as a cylinder, cone, pyramid, etc.

Gripping slots 35 are provided with stabilising holes 39 located in the upper wall 36 of slot 35 within the trapezoidal projection in flange 30. The introduction of stabilising holes 39 allows tray 1 to be further stabilised by the automated gripper and partially eliminates the movement of tray 1 relative to the gripper. Advantageously, the stabilising hole 39 is located in the upper wall 36 of the socket 35 above the front tab 37.

Advantageously, the tray comprises side bars 25 provided with longitudinal recesses 27 forming transport guides, the recesses 27 being located in the lower surface of the side bar 25. The side bars 25 are advantageously provided with at least two recesses 27, however, in alternative embodiments, more recesses 27 may be introduced. The recesses 27 are semi-circular in cross-section and spaced apart generally by the length of the diameter of a single recess 27. Recesses 27 run along the side bars 25. The number of recesses 27 and their width can be selected to minimise the frictional force occurring between the bottom surface of the side bar 25 of tray 1 and the sliding guides of the rack in which the tray is moved.

The side bars 25 run along the side walls 21, 22 of tray 1 and extend beyond the front and rear walls of tray 23, 20, ending in front of the end of the front tab 37 extending from the gripping flange 30, the side bars 25 being connected via a reinforcing wall 40 to the gripping flange 30 and the front tab 37. Shaping the corner of the tray in this way improves its mechanical strength, stiffening the structure.

Tray 1 is advantageously manufactured with plastics using the injection moulding method. Advantageously, the material of the tray is electrically conductive plastic, which prevents the buildup of static electricity on the surface of the tray.

### List of reference numerals

- 1: tray
- 10: carrying chamber
- 15: tray bottom
- 17: reinforcing ribbing
- 20: tray back wall
- 21: tray side wall
- 22: tray side wall
- 23: tray front wall
- 25: side bars
- 27: recesses in the side bar
- 30: gripping flanges
- 35: gripping slots
- 37: front tab
- 38: side walls of the trapezoidal projection forming a gripping slot
- 36: top wall of trapezoidal projection forming a gripping slot
- 39: stabilisation holes
- 40: reinforcing wall

## Claims

1. A transport tray (1) for automated parcel terminals (APTs) comprised with
a carrying chamber (10) with a bottom (15) with reinforcing ribbing (17) and four walls (20, 21, 22, 23), the tray being provided with side bars (25) crowning the upper edges of the side walls (21, 22) of the tray (1),
the walls of the tray (20, 21, 22, 23) run upwards from the bottom (15) diagonally outwards,
**characterised in that**
at the edges of the front and rear walls (20, 23) the tray is provided with two gripping flanges (30), each of which is provided with at least two gripping slots (35) and a front tab (37), whereas
the gripping flanges (30) run downwards diagonally to the outside of the tray, with the face tab (37) essentially running outwards parallel to the bottom (15) of the tray (1).

2. The tray according to claim 1 wherein the grip slots (35) are in the form of a trapezoidal projection.

3. The tray according to claims 1 or 2, wherein the trapezoidal projection of the slot (35) is formed by two side walls (38) and an upper wall (36).

4. The tray according to any of claims 1 to 3, wherein the trapezoidal projection of the slot (35) runs through the front tab (37), the gripping flange (30) and the front wall of the tray (20, 23).

5. The tray according to any of claims 1 to 4, **characterised in that** the gripping slots (35) are provided with stabilising holes (39) located in the upper wall (36) of slot (35) within the trapezoidal projection in flange (30).

6. The tray according to claim 5, wherein the stabilising hole (39) is positioned above the front tab (37).

7. The tray according to any of the claims 1 to 6, wherein the side bars (25) provided with longitudinal recesses (27) forming transport guides are located in the lower surface of the side bar (25) and run along the side bars (25).

8. The tray according to claim 7, wherein the side bars (25) are provided with at least two recesses (27).

9. The tray according to claim 7 or 8, wherein the recesses (27) are semicircular in cross-section and spaced from each other essentially by the length of the diameter of the single recess (27).

10. The tray according to any of claims 1 to 9, where in the side bars (25) run along the side walls (21, 22) and extend beyond the front wall of the tray (20, 23), ending in front of the end of the front tab (37) extending from the gripping flange (30).

11. The tray according to claim 10, wherein the side bars (25) are connected via a reinforcing wall (40) to a gripping flange (30) and a front tab (37).
